# EUROPEAN PATENT APPLICATION

(11) **EP 1 980 363 A1**
(43) Date of publication of application: **15.10.2008**
(21) Application number: 08006583.2
(22) Date of filing: 31.03.2008
(51) Int. Cl.: B23Q 17/24, B25F 5/02, B23Q 17/22

(54) **Video aid system**

(30) Priority: 10.04.2007 US 922672 P; 07.03.2008 US 75069
(71) Applicant: Techtronic Industries Company Limited, Tsuen Wan New Territories Hong Kong (CN)
(72) Inventor: Chan, Ka Ki, Kowloon (HK); Mok, Kwok Ting, Tokwawan (HK); Lau, Siu Yan, New Territories (HK)
(74) Representative: Martin, David John

(57) **Abstract**

A work device is disclosed that comprises a body and a drive portion attached with the body for working on a workpiece. At least one camera is attached with the body, and at least one video display device is operatively connected with the at least one camera. The camera is positioned on the body at an angle that is not perpendicular to the workpiece when the workpiece is positioned to be worked on by the drive portion. The at least one camera transmits images to the at least one video display.

## Description

### RELATED APPLICATIONS

The present patent document claims the benefit of the filing date under 35 U.S.C. §119(e) of Provisional U.S. Patent Application Serial No. 60/922,672, filed April 10, 2007, which is hereby incorporated by reference.

### BACKGROUND

The present application relates to tools, and more particularly, to video-monitoring systems for use with tools.

When using a tool, whether hand-held, a power tool or other work device, it is often desirable to see the area being worked upon with the tool. However, the tool often may obstruct the view of the work area. This may require a user to manipulate his head about the work area for an unobstructed view, which may be inconvenient for a user attempting to use the tool. Moreover, even if a user's view of a work area is unobstructed, the user may have to bring his head closer to the work area due to the small size of the work area. Again, this may be inconvenient or distracting to a user attempting to use the tool.

By way of example, when using a circular saw such as a miter saw, a user will mark the area where it is desired to make a cut with a "cut line" prior to cutting the workpiece with the blade. Then, prior to powering the tool and penetrating the workpiece with the blade, the user then typically will align the blade with the cut line. Because the saw's blade and guard may obstruct the user's view of the cut line, the user may have to move his head to the side of the blade during the alignment process. This may be inconvenient and, because the user may have to angle his head when moving it to the side, may nonetheless result in an inaccurate alignment. Moreover, to help ensure an accurate cut, the user may keep his head to the side of the blade and guard while the workpiece is being cut, which again may be inconvenient.

### BRIEF SUMMARY

In a first aspect the invention resides in a work device comprising a body, a drive portion attached with the body for working on a workpiece, at least one camera attached with the body, at least one video display device operatively connected with the at least one camera, wherein the at least one camera is positioned on the body at an angle that is not perpendicular to the workpiece when the workpiece is positioned to be worked on by the drive portion, and wherein the at least one camera transmits images to the at least one video display device.

In a further aspect the invention resides in a video aid system comprising at least one camera attached with a work device, at least one video display device operatively connected with the at least one camera, wherein the work device is for working on a workpiece, and wherein the camera is positioned at an angle that is not perpendicular to the workpiece when the workpiece is to be worked on by the work device, and wherein the at least one camera transmits images to the at least one video display device.

The work device may be a power tool, and which may be hand-held.

The camera may be operatively connected to the video display device either by means of a cable, or by a wireless connection. The video display device may be attached to an article of clothing worn by the user, such as a pair of goggles.

The camera is preferably positioned to provide a plan view of a work area to be worked on with the drive portion.

The camera and/or the video device may be removably mountable, and may be adjustable. The display may be modular, such that it may be opened and closed.

In a still further aspect the invention resides in a method for transmitting a device using a video aid system, the video aid system including at least one camera, the method comprising positioning the at least one camera on a work device such that the camera can record an unobstructed image of a workpiece located in a work area of the work device, wherein the camera is positioned at an angle that is not perpendicular to a workpiece located in the work area, and operatively connecting at least one video display device with the camera.

The method may further comprise attaching the at least one video display device with the work device, or attaching the at least one video device to an article to be worn by a user of the work device, such as to a pair of goggles.

### BRIEF DESCRIPTION OF THE DRAWINGS

Figure 1 is a side view of a first embodiment of a circular saw.

Figure 2 is a view of a visual aid system.

Figure 3 is a perspective view of a second embodiment of a circular saw.

Figure 4 is a view of a display.

Figure 5 is a perspective view of a router.

Figure 6 is a side view of a drill.

Figure 7 is a perspective view of a scroll saw.

Figure 8 is a perspective view of a miter saw.

Figure 9 is a plan view of a camera.

Figure 10 is a perspective view of goggles including a display.

Figure 11A is a perspective view of a modular display in an open position.

Figure 11B is a perspective view of a modular display in a closed position.

Figure 12 shows a second embodiment of goggles having a display, with the goggles connected with a circular saw.

### DETAILED DESCRIPTION OF THE DRAWINGS AND THE PRESENTLY PREFERRED EMBODIMENTS

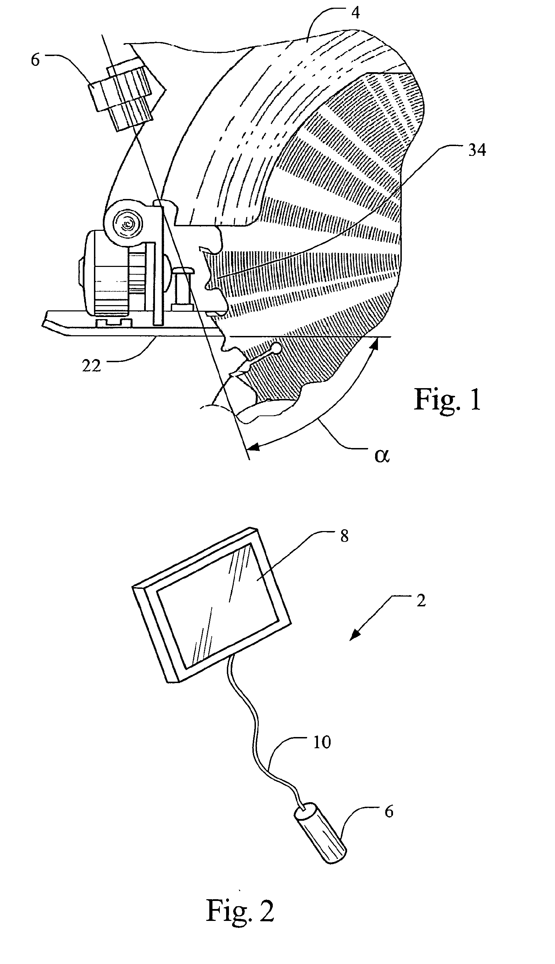

Referring to Figures 1 and 2, a visual aid system 2 is shown and described herein for use with various tools, including but not limited to power tools, hand-held tools, stationary and bench top tools, floor care products such as polishers, and other work devices 4. The visual aid system 2 includes at least one display 8 and at least one video camera 6. The display 8 and the camera 6 may be operationally connected through a cable 10, or, alternatively, may utilize a wireless connection. For a wireless connection, the camera includes at least one transmitter that transmits a signal to a receiver associated with the display.

The visual aid system 2 may be battery powered with single use or rechargeable batteries. Alternatively, the visual aid system may utilize a cord that can be plugged into a car lighter or an alternate current outlet as possible power sources. When the visual aid system is powered 2, the cable (or the wireless connection) will transmit images being recorded by the camera to the display. The display provides a visualization of the images being recorded.

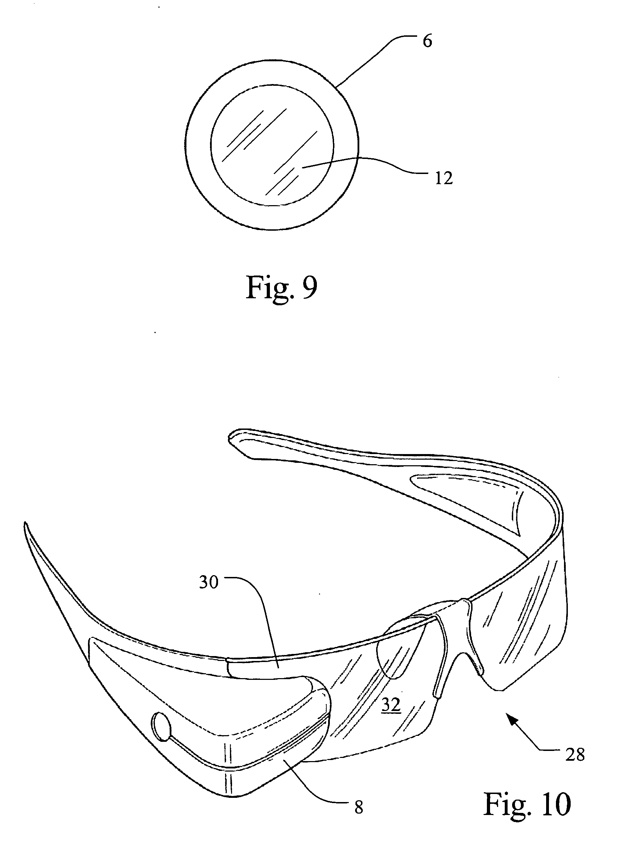

The camera 6 may be any suitable camera, but, preferably, is small for easy placement on the work device 4. Moreover, it is preferable for the camera 6 to include a lens 12 (Figure 9) so that the images are magnified and enlarged when displayed on the display 8.

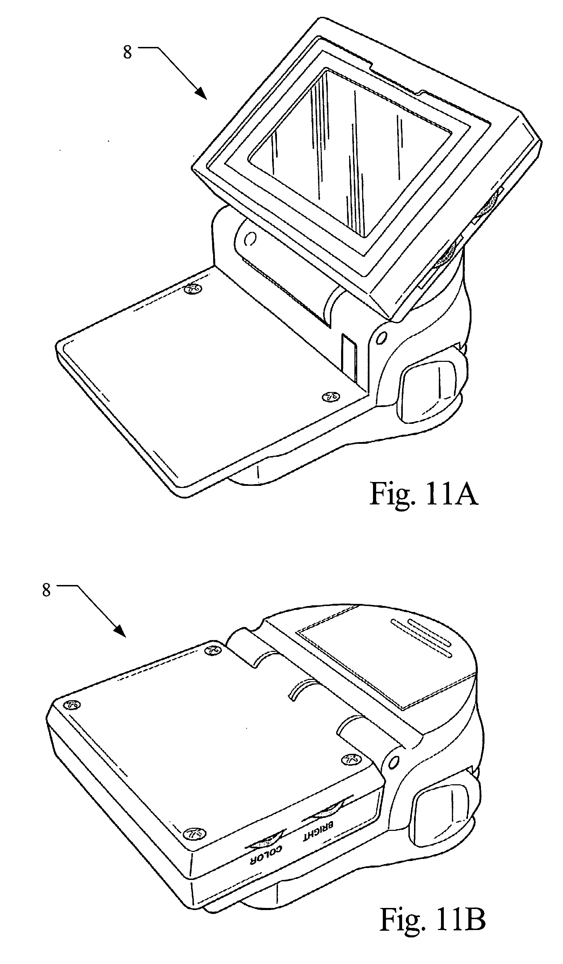

The display 8 preferably is a liquid crystal display screen, although in other embodiments other types of screens may be used. Examples include, but are not limited to, cathode ray tube displays, plasma display panels, and surface-conduction electron-emitter displays. Optionally, and as shown in Figures 11A and 11B, the display may be modular such that it may be opened and closed, respectively. Moreover, the display 8 (and/or the camera 6) may also include a "zoom" function that allows for close-ups of images being transmitted from the camera.

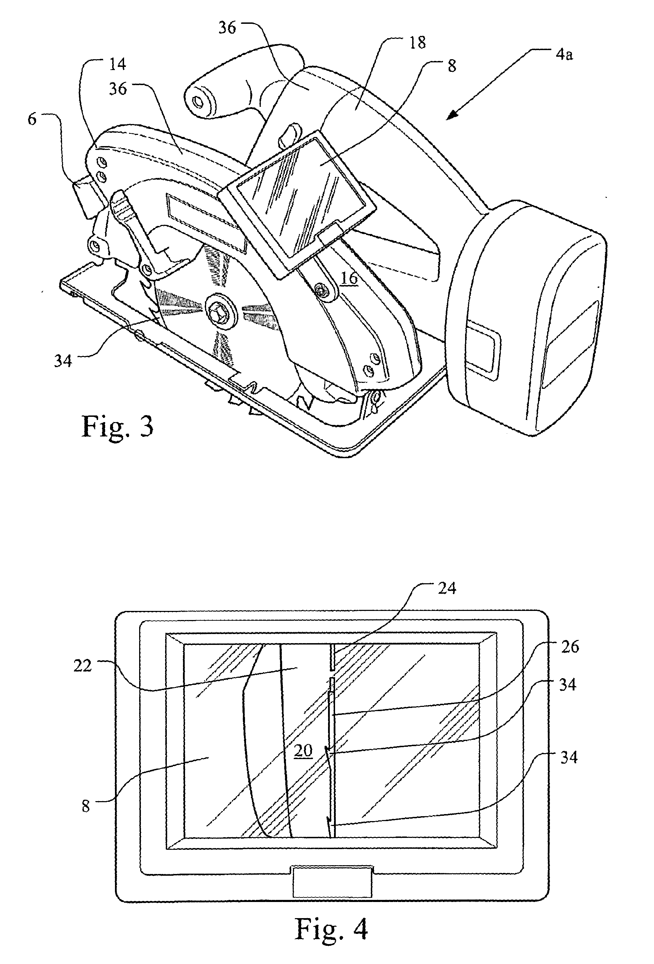

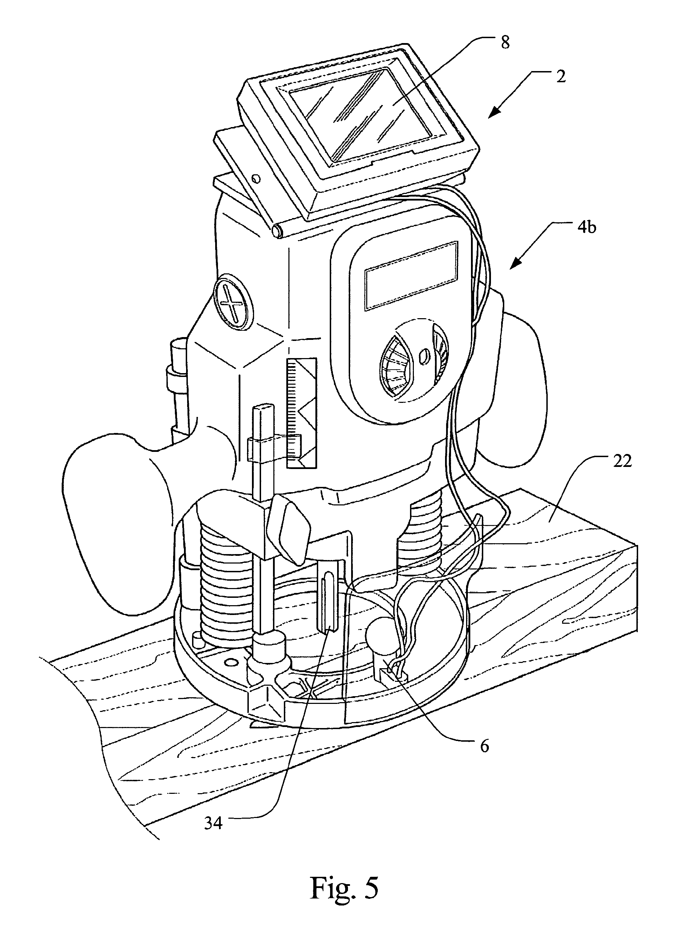

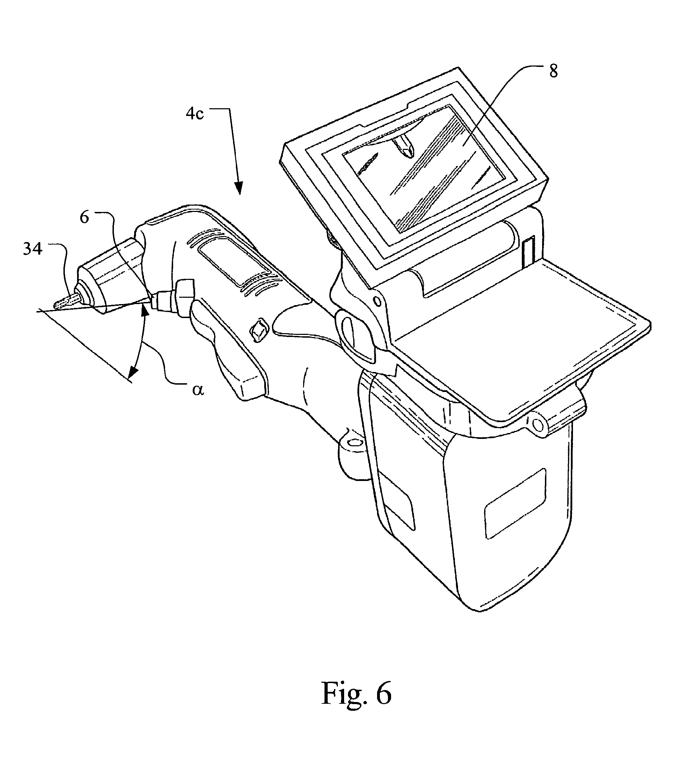

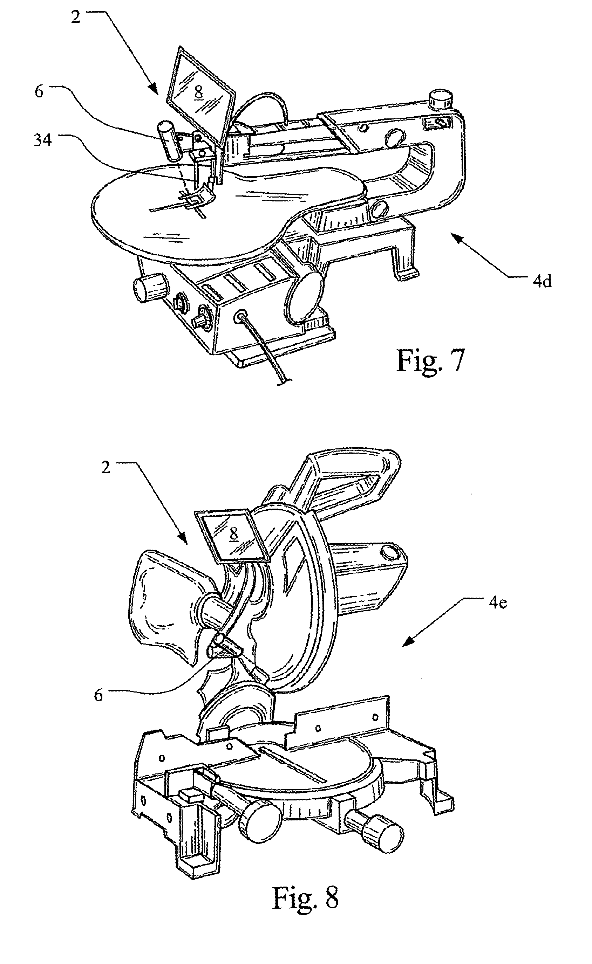

The visual aid system 2 may be used with a variety of work devices 4 that include a drive portion 34. To further explain, on a circular saw 4a, for example, "the drive portion" is the saw blade 34 (Figure 3). Figure 5 shows a router 4b whose drive portion 34 is a router bit. Figure 6 shows a drill 4c whose drive portion 34 is a drill bit. Figure 7 shows a scroll saw 4d whose drive portion 34 is a blade.

The camera and display are attached to a body 36 of the work area, and the drive portion 34 is attached to the body. In one example, Figure 3 shows the visual aid system attached with a circular saw 4a. The camera 6 is located inside an upper guard 14 of the circular saw 4a and the display 8 is located on an outer surface 16 of the upper guard 14. Note that both the camera and display could be located on other portions of circular saw. For example, the camera 6 could be located on the outer surface 16 of the upper guard 14. By way of further example, the display 8 may be located on the saw's handle 18.

In general, it is desirable to position the camera 6 so that images of a desired work area associated with the drive portion 34 are displayed as an unobstructed image on the display. As shown in Figure 4, when using a circular saw, it is customary to mark a workpiece 22 to be cut with a cut line 24.
Generally, it is desirable to align a blade 26 of the saw with the cut line 24 prior to penetrating the workpiece 22 with the saw blade 26. With the visual aid system, it is preferable to position the camera so that the image is displayed as a plan view, simulating a user looking directly down upon the work area 20. Furthermore, it is preferable to position the camera at an angle, depicted as *α* in Figures 1 and 6, that is not perpendicular to the workpiece 22.

Advantageously, the image transmitted shows an unobstructed view of the alignment of the blade 26 and the cut line 24. Furthermore, such a view allows the user to continually adjust the workpiece 22 and work device 4 without a user having to move about the work area 20 for an unobstructed view.

Notably, the visual aid system 2 need not be positioned as shown in Figures 1 and 3. By was of further examples, Figures 5-8 show the camera 6 and display 8 of the visual aid system 2 in use with the router 4b, the drill 4c, the scroll saw 4d, and a miter saw 4e, respectively.

The visual aid system may be fixedly mounted or removable mounted to the work device. Fasteners, clips, hook-and-loop fasteners such as VELCRO, clamps, nuts and bolts, adhesives, or the like, may be used to attach the visual aid system to a work device. Advantageously, with removable visual aid systems, a single visual aid system may be used with a variety of work devices.

In additional embodiments, the display and camera may be adjustable so that they may be manipulated (i.e., rotated and/or tilted). By way of example, the display and/or camera may be attached to a joint so that each may be adjusted about the joint's axis, or axes if a universal joint, of rotation. By way of further example, the display and/or camera may be adjusted through the use of a gimbal that, upon being moved to a desired position, is retained in position with the use of a screw or knob.

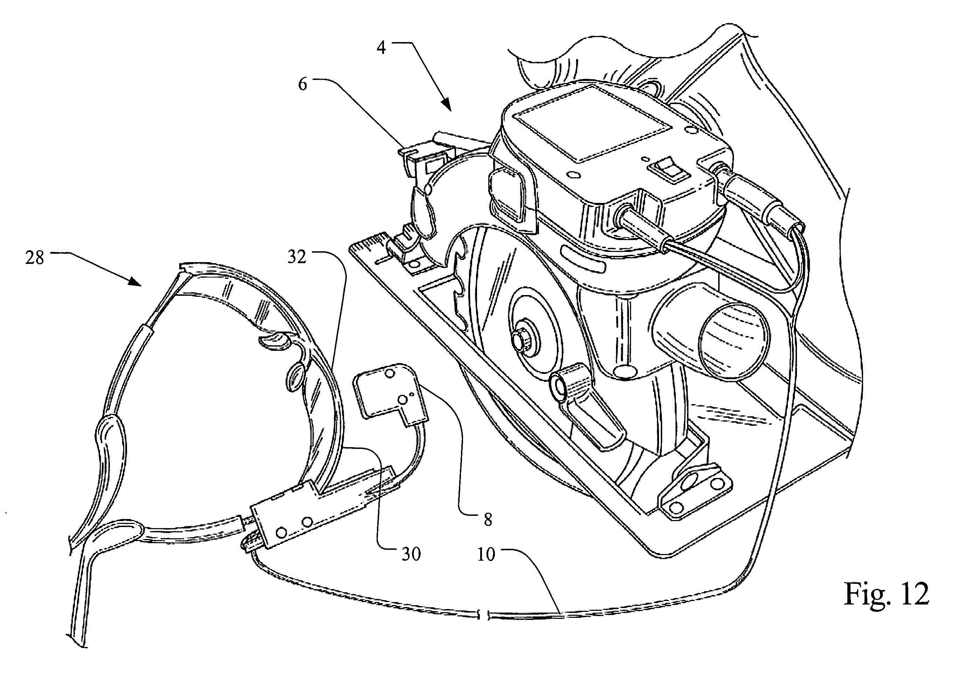

Figure 10 shows an alternate embodiment of the visual aid system. In this embodiment, the display 8 is remotely located with respect to the camera and is attached to a pair of glasses or goggles 28. As shown in Figure 12, which shows another embodiment of goggles 28 having a display 6, the camera 8 is attached to the work device 4 as described above and images being recorded by the camera are transmitted to the display 8. In the embodiment in Figure 12, the display 8 and camera 6 are connected via cables 10 that may be attached to various portions of the work device 4. In an alternate embodiment, a wireless connection may be utilized as described above. Preferably, the display 8 is attached to an outer portion 30 of the glasses to minimize any interference with the glasses' associated lens 32. In addition to glasses, the monitor may be attached to visors, helmets, hats, or other items that may be worn by the user so that the user can see the image on the display.

Thus, a visual aid system has been described herein. The advantages associated with the visual aid system are numerous. The visual aid system allows a user visual access to a work area without the user having to move about the work device for an unobstructed view. In addition, the removable nature of the visual aid system is convenient for its use with a variety of work devices. Further, the magnification of the displayed image on the display provides improves visibility. As an additional advantage, the unobstructed view of the work area allows a user to continually make adjustments to the work device and/or workpiece without having to move about the work device or turn off the work device or move

It is therefore intended that the foregoing detailed description be regarded as illustrative rather than limiting. For example, the camera may incorporate a light to illuminate the work area displayed on the display.
Therefore, it is to be understood that it is the following claims, including all equivalents, that are intended to define the scope of this invention.

## Claims

1. A work device comprising:
a body;
a drive portion attached with the body for working on a workpiece;
at least one camera attached with the body;
at least one video display device operatively connected with the at least one camera;
wherein the at least one camera is positioned on the body at an angle that is not perpendicular to the workpiece when the workpiece is positioned to be worked on by the drive portion, and wherein the at least one camera transmits images to the at least one video display device.

2. The work device of claim 1, further comprising a power tool.

3. The work device of claim 1 or 2, further comprising a hand-held tool.

4. The work device of claim 1, 2 or 3, further comprising a cable that operatively connects the at least one camera to the at least one video display device.

5. The work device of claim 1, 2 or 3, wherein the at least one camera is operatively connected with the at least one video display device with a wireless connection.

6. The work device of any preceding claim, wherein at least one video display device is attached to an article to be worn by a user of the work device.

7. The video aid system of claim 6, wherein at least one video display device is attached to a pair of goggles.

8. The work device of any preceding claim, wherein the camera is positioned to provide a plan view of a work area to be worked on with the drive portion.

9. The work device of any preceding claim, wherein at least one of the camera and one of the video display device is removably mountable.

10. The work device of any preceding claim, wherein at least one of the camera and one of the video display device is adjustable.

11. The work device of any preceding claim, wherein the at least one video display device is modular.

12. A video aid system comprising:
at least one camera attached with a work device;
at least one video display device operatively connected with the at least one camera;
wherein the work device is for working on a workpiece, and wherein the camera is positioned at an angle that is not perpendicular to the workpiece when the workpiece is to be worked on by the work device, and wherein the at least one camera transmits images to the at least one video display device.

13. The video aid system of claim 12, wherein at least one video display device is attached to an article to be worn by a user of the work device.

14. The video aid system of claim 13, wherein at least one video display device is attached to a pair of goggles.

15. The video aid system of any one of claims 12 to 14, wherein the work device further comprises a power tool.

16. The video aid system of any one of claims 12 to 15, wherein the work device further comprises a hand-held tool.

17. The video aid system of any one of claims 12 to 16, further comprising a cable that operatively connects the at least one camera to the at least one video display device.

18. The video aid system of any one claims 12 to 16, further comprising a wireless connection that operatively connects the at least one camera with the at least one video display device.

19. The video aid system of any one of claims 12 to 18, wherein at least one of the camera and one of the video display device is removably mountable.

20. The video aid system of any one of claims 12 to 19, wherein the at least one video display device is modular.

21. A method for transmitting a device using a video aid system, the video aid system including at least one camera, the method comprising:
positioning the at least one camera on a work device such that the camera can record an unobstructed image of a workpiece located in a work area of the work device, wherein the camera is positioned at an angle that is not perpendicular to a workpiece located in the work area; and
operatively connecting at least one video display device with the camera.

22. The method of claim 21, further comprising attaching the at least one video display device with the work device.

23. The method of claim 21, further comprising attaching the at least one video display device to an article to be worn by a user of the work device.

24. The method of claim 23, further comprising attaching the at least one video display device to goggles.

25. The method of any one of claims 21 to 24, further comprising adjusting at least one of the camera and one of the video display device.
